# EUROPEAN PATENT SPECIFICATION

(11) **EP 3 199 604 B1**
(45) Date of publication and mention of the grant of the patent: **23.12.2020**
(21) Application number: 15843211.2
(22) Date of filing: 14.09.2015
(51) Int. Cl.: C09D 201/00, C09D 5/10, C09D 183/02, C09D 183/04, C23C 26/00, C23F 11/00

(54) **RUST-INHIBITING PAINT COMPOSITION AND APPLICATION FOR SAME**
ROSTHEMMENDE LACKZUSAMMENSETZUNG UND APPLIKATION DAVON
COMPOSITION DE PEINTURE ANTIROUILLE, ET MISE EN OUVRE DE CELLE-CI

(30) Priority: 26.09.2014 JP 2014197100
(43) Date of publication of application: 02.08.2017
(73) Proprietor: Chugoku Marine Paints, Ltd., Hiroshima 739-0652 (JP)
(72) Inventor: OKADA, Masamitsu, Otake-shi Hiroshima 739-0652 (JP)
(74) Representative: Hoffmann Eitle
(86) International application number: PCT/JP2015/075983
(87) International publication number: WO 2016/047480

(56) References cited:
- WO-A1-2014/014063
- WO-A1-2014/032844
- JP-A- S61 589
- JP-A- S4 822 123
- JP-A- S5 441 937
- JP-A- S52 151 635
- JP-A- S53 119 932
- JP-A- S59 122 556
- JP-A- 2005 097 584
- JP-A- 2005 097 584
- US-A- 5 252 632
- US-A- 5 413 628

## Description

### Technical Field

The present invention relates to a rust-preventive coating composition which is excellent in rust prevention properties or the like used for a processing process or the like of a steel plate; and uses thereof.

### Background Art

Conventionally, large steel structures such as ships, marine structures, plants, bridges and overland tanks, in order to be prevented from rusting, have their steel plate surfaces coated with rust-preventive coating materials. Known rust-preventive coating materials include organic rust-preventive coating materials such as wash primers, non-zinc epoxy primers and epoxy zinc-rich primers as well as inorganic zinc rust-preventive coating materials including siloxane-based binders and zinc powders. Of these rust-preventive coating materials, most widely used are inorganic zinc rust-preventive coating materials, which are excellent in heat resistance.

A steel plate coated with an inorganic zinc rust-preventive coating material is assembled by heating operations entailing a high temperature such as fusion-cutting, welding, and straightening. The temperature during those heating operations of a steel plate reaches from several hundred degrees centigrade to about 1200°C which is near the melting point of iron. On the other hand, the melting point of zinc is 419°C, and zinc is rapidly oxidized when the temperature of zinc exceeds the temperature. For this reason, in a step such as fusion-cutting, welding, or straightening, zinc in a coating film is likely to be oxidized. When zinc in coating films is oxidized, white rust composed of zinc oxide is generated on the surface of the coating films, causing a loss of zinc in the coating films. For this reason, rust prevention properties of the coating films deteriorate, and if the coating films are exposed outdoors, the coating films generate rust in a short time. Thus, the coating films are required to have high rust prevention properties even after heated to high temperature.

The fact that zinc oxide takes the form of white crystals sometimes permits the coating films to have a changed color at thermally-damaged parts. Thus, in order to ensure that single films have heat resistance and long-term rust prevention properties, the coating films applied which are visible to human eyes and have reduced rust prevention properties conventionally needed to undergo an elaborate secondary surface preparation including a power tool treatment and sweep blasting upon being repaired. It is therefore preferable that the coating films have thermal-discoloration resistance as well.

Patent Document 1 (JP 2005-97584 A) discloses a primary rust-preventive coating composition using amorphous glass powder including an alkali metal oxide, and describes that, even when a steel plate coated with the coating composition is welded at a high rate not less than 100 cm/min, generation of welding defects such as pits or blowholes can be suppressed without deteriorating rust prevention properties. However, this coating composition has a variety of constraints such as a demand for a surface treatment step of amorphous glass powder by an acidic solution or an inorganic compound which generates a pyrolysis gas. Thermal-discoloration resistance, which is required in a heat-resistant rust-preventive coating composition, is not described in the patent document.

Patent Document 2 (JP 1995-268216 A) discloses a composition for coating containing (a) polysiloxane, (b) an inorganic filler, and (c) an inorganic material generating a film in a melting state. Patent Document 2 describes that the composition may further contain zinc powder. However, prevention of oxidation of zinc is not described in the patent document.

Patent Document 3 (JP 1996-27424 A) discloses an inorganic coating material containing (a) a silicone emulsion, (b) a colloidal silica, and (c) an alkali titanate which have an effect of improving heat resistance and rust prevention properties. Patent Document 3 describes that the coating material may contain zinc as a rust preventive material. However, prevention of oxidation of zinc is not described in the patent document.

Patent Document 4 (JP 1999-510536 A) discloses a coating mixture containing (a) polysiloxane, (b) a reactive inorganic filler, (c) an inorganic material which forms a film as a molten material, (d) a pigment and/or a non-reactive inorganic filler, (e) a reactive (oligo) silane, (f) a catalyst, and (g) other additives. Patent Document 4 describes that the coating mixture may contain zinc powder. However, prevention of oxidation of zinc is not described in the patent document.

Patent Document 5 (JP 2000-309748 A) discloses a heat-resistant coating composition for steel materials that is excellent in thermal-discoloration resistance and flame resistance, the composition containing 0.5 wt% or less of iron compounds. The coating is described as being composed of (A) an alkylsilicate, (B) an extender pigment, (C) zinc dust and (D) zinc oxide or/and titanium oxide powder. However, prevention of oxidation of zinc is not described in the patent document.
Patent document WO-A-2014/032844 describes an anti-corrosive coating composition for protecting iron and steel surfaces wherein the composition comprises zinc particulates, conductive pigments, hollow glass microspheres and an epoxy resin or a polysiloxane-based binder system. The zinc particulates are present in an amount of 30 to 50 by solids volume and the amount of hollow glass micropsheres in the composition is in the range of 1.0 to 3.0 wt.%. The weight ratio of glass microspheres to zinc particulate falls there within the range of 0.005 to 0.10. The hollow glass microspheres have a softening point of 600°C but a diameter higher than 15 µm.
Patent document US-A-5 252 632 describes coating compositions for use as cathodic coatings for prevention of corrosion in metallic substrates wherein the coating composition comprises a binder, zinc powder and hollow glass microspheres. A method for preparing the coated substrate is also disclosed. The weight ratio of glass particles to the zinc powder is 0.076.
Patent document US-A-5 413 628 describes coating compositions suitable to be used for the preparation of coating films having improved anti-corrosion properties and comprising a binder formed from alkyl silicates, zinc powder and glass particles. The compositions do not contain glass powder.

### Related Art Documents

### Patent Document

Patent Document 1: JP 2005-97584 A
Patent Document 2: JP 1995-268216 A
Patent Document 3: JP 1996-27424 A
Patent Document 4: JP 1999-510536 A
Patent Document 5: JP 2000-309748 A

### Summary of Invention

### Technical Problem

An object of the present invention is to solve the problems associated with the above-described conventional techniques and to provide a rust-preventive coating composition capable of forming a rust-preventive coating film which has excellent rust prevention properties and thermal-discoloration resistance even after the rust-preventive coating film is heated at a high temperature, for example, from 400 to 900°C, and uses thereof. Solution to Problem

In order to solve the above-described problems, the present inventors studied a rust-preventive coating composition containing a binder, a zinc powder, and a glass powder for the influence of the glass powder on a coating film formed from the coating composition. As a result, the present inventors have found that factors including the softening point of the glass powder and the like can contribute to the solution to the above-described problems, thereby completing the present invention.

That is, the present invention provides a rust-preventive coating composition comprising:
a binder (a) which is a condensate of at least one a binder (a), compound selected from alkylsilicates and methyltrialkoxysilanes;
a zinc powder and/or zinc alloy powder (b) ; and
a glass powder (c) having a softening point of from 400 to 700°C, and a median diameter (D50) of 1-10 µm, wherein the mass ratio (c)/(b) of the glass powder (c) to the zinc powder and/or zinc alloy powder (b) is 0.005-0.10.

The rust-preventive coating composition is, for example, a heat-resistant rust-preventive coating composition.

The present invention provides a coating film formed from the rust-preventive coating composition. The present invention also provides a substrate with a coating film, which has the substrate and the coating film formed on a surface of the substrate, the coating film being composed of the rust-preventive coating composition.

The present invention also provides a method for producing a substrate with a coating film, which comprises a step of applying the rust-preventive composition on a surface of a substrate, and a step of curing the rust-preventive coating composition thus applied to form a coating film.

### Advantageous Effects of Invention

The present invention can provide a rust-preventive coating composition capable of forming a rust-preventive coating film which has excellent weldability, and has excellent rust prevention properties and thermal-discoloration resistance due to the prevention of the oxidation of zinc or the like even after the rust-preventive coating film is heated at a high temperature, for example, from 400 to 900°C, and also provide a variety of uses using the rust-preventive coating composition.

### Description of Embodiments

Hereinafter, a rust-preventive coating composition (hereinafter, also referred to as "coating composition"), a rust-preventive coating film, a substrate with a rust-preventive coating film, and a method for producing the same, of the present invention, including preferred embodiments thereof, will be described in detail.

### [Rust-Preventive Coating Composition]

The rust-preventive coating composition according to claim 1 of the present invention contains a binder (a) which is a condensate of at least one compound selected from alkylsilicates and methyltrialkoxysilanes, a zinc powder and/or zinc alloy powder (b), and a glass powder (c) which has a softening point of from 400 to 700°C and a median diameter (D50) of 1-10 µm, wherein the mass ratio (c)/(b) of the glass powder (c) to the zinc powder and/or zinc alloy powder (b) is 0.005-0.10. The composition may further contain one type or two or more types selected from binders other than the binder (a), pigments other than the zinc powder and/or zinc alloy powder (b) and the glass powder (c), molybdenum, molybdenum compounds, coloring pigments, additives and solvents.

The rust-preventive coating composition of the present invention is usually used as a two component-type composition. That is, the coating composition is usually composed of a base (vehicle) component and a pigment component. It is preferable that before use, the base component and the pigment component are separately stored, and immediately before use, these are sufficiently stirred and mixed with each other to prepare the rust-preventive coating composition.

The base component usually contains the binder (a) and a solvent. As the case may be, the base component may contain at least one selected from other binders and additives.

The pigment component usually contains the zinc powder and/or zinc alloy powder (b) and the glass powder (c) which has a softening point of from 400 to 700°C. The pigment component may, as needed, contain at least one selected from other pigments, molybdenum, molybdenum compounds, coloring pigments, additives and organic solvents, and may contain any of those components mixed therein in accordance with a conventional method.

### <Binder (a)>

The rust-preventive coating composition of the present invention contains the binder (a) as an essential component.

The binder (a) is a condensate of alkylsilicates and/or of methyltrialkoxysilanes.

Examples of the alkylsilicates include compounds such as tetramethylorthosilicate, tetraethylorthosilicate, tetra-n-propylorthosilicate, tetra-i-propylorthosilicate, tetra-n-butylorthosilicate, ortetra-sec-butylorthosilicate; or compounds such as methylpolysilicate, or ethylpolysilicate.

Examples of the methyltrialkoxysilanes include compounds such as methyltrimethoxysilane or methyltriethoxysilane.

Among the condensates of alkyl silicates and condensates of methyltrialkoxysilanes, the condensates of alkylsilicates are preferable; condensates of tetraethylorthosilicate are more preferable; and a partial hydrolysis condensate of ethyl silicate 40 (trade name; manufactured by COLCOAT CO., LTD.) of an initial condensate of tetraethylorthosilicate is particularly preferable.

The binder (a) can be produced by a hitherto known method. The binder (a) may be used singly, or two or more kinds thereof may be used in combination.

The solid content of the binder (a) to the non-volatile content in the rust-preventive coating composition is usually from 2 to 70% by mass, preferably from 3 to 50% by mass, and more preferably from 4 to 30% by mass. Here, a heating residue (non-volatile content) of the coating composition can be measured in accordance with a standard (heating temperature: 125°C, and heating time: 60 minutes) of JIS K5601 1-2.

### <Zinc Powder and/or Zinc Alloy Powder (b)>

The rust-preventive coating composition of the present invention contains the zinc powder and/or zinc alloy powder (b) as an essential component.

The zinc powder and zinc alloy powder function as a rust-preventive pigment that prevents a steel plate from rusting.

Examples of the zinc alloy include an alloy formed by zinc and at least one selected from aluminum, magnesium and tin, preferably zinc-aluminum alloy and zinc-tin alloy.

Zinc powder and zinc alloy powder in a variety of shapes such as a spherical shape or a flaky shape can be used.

The term "spherical shape" refers to a shape close to a sphere, and the aspect ratio is not restricted to a particular range, and preferably, is usually from 1 to 3.

Examples of commercially available spherical zinc powder include F-2000 (trade name; manufactured by The Honjo Chemical Corporation).

Flaky zinc powder and zinc alloy powder having a median diameter (D50) of not more than 30 µm, and having an average thickness of not more than 1 µm are preferable.

Examples of commercially available flaky zinc powder include STANDART Zinc flake GTT, STANDART Zinc flake G (trade name; manufactured by ECKART GmbH) . Examples of commercially available flaky zinc alloy powder include STAPA 4 ZNAL7 (alloy of zinc and aluminum; trade name; manufactured by ECKART GmbH) , STAPA 4 ZNSN30 (alloy of zinc and tin; trade name; manufactured by ECKART GmbH) .

Regarding the zinc powder and/or zinc alloy powder (b), either or both of zinc powder and zinc alloy powder can be used, and each of the zinc powder and zinc alloy powder can be used singly, or two or more kinds thereof may be used in combination.

The content of the zinc powder and/or zinc alloy powder (b) with respect to the non-volatile content of the rust-preventive coating composition is usually from 10 to 90% by mass, preferably from 20 to 80% by mass, and more preferably from 25 to 70% by mass.

### <Glass Powder (c)>

The rust-preventive coating composition of the present invention contains, as an essential component, the glass powder (c) which has a softening point of from 400 to 700°C. The glass powder (c) functions as an oxidation inhibitor of zinc when a coating film is heated at a high temperature, for example, from 400 to 900°C.

The glass powder is formed by, for example, heating and melting a compound which constitutes the glass at about from 1000 to 1100°C for a predetermined time, and, after cooling, being granulated in a powdery shape by a trituration apparatus. Examples of components of glass generally include SiO₂, B₂O₃, Al₂O₃, ZnO, BaO, MgO, CaO, SrO, Bi₂O₃, Li₂O, Na₂O, K₂O, PbO, P₂O₅, In₂O₃, SnO, CuO, Ag₂O, V₂O₅, and TeO₂. Although PbO can be used as a compound which constitutes glass, PbO is desirably not used since PbO may adversely affect the environment.

The glass powder (c) contains the above-described compounds in desired ratio to attain a variety of glass properties such as a softening point, a thermal expansion coefficient, a permittivity, a transparency, and a color.

An important property of the glass powder (c) used in the present invention is that its softening point is from 400 to 700°C.

The softening point of the glass powder (c) is from 400 to 700°C, preferably from 450 to 650°C, and further preferably from 500 to 620°C. In cases in which the softening point of the glass powder (c) is in this range, even when a coating film formed from the coating composition is treated at a high temperature, for example, from 400 to 900°C, the molten glass powder coats the surface of zinc and zinc alloy, thereby suppressing oxidation of zinc, and excellent rust prevention properties can be exhibited even after the coating film is heated at from 400 to 900°C. If the softening point of the glass powder is below 400°C, since the glass powder melts before zinc and zinc alloy, the surface of zinc cannot be sufficiently coated. On the other hand, if the softening point of the glass powder is excessively high, an effect obtainable when molten glass covers the surface of zinc and zinc alloy is not obtained from the time when the temperature exceeds the melting point of zinc and zinc alloy to the time when such a softening point of the glass powder is reached, thereby progressing oxidation of zinc. Glass powder having a softening point of about 800°C would provide the rust prevention properties, and yet the rust prevention properties are much preferably obtainable by the glass powder having a softening point of 700°C or lower.

The glass powder (c) having a softening point falling within the above range can provide the coating composition of the invention capable of forming coating films excellent in thermal-discoloration resistance. Both when the softening point of the glass powder is lower than 400°C and when the softening point of the glass powder is higher than 700°C, favorable thermal-discoloration resistance is not obtainable.

The softening point of the glass powder (c) is determined using a Littleton viscometer by a determination method by a temperature at which the viscosity coefficient η reaches 10^{7.6}.

Examples of commercially available products of the glass powder (c) include NB122A (trade name; manufactured by Central Glass Co., Ltd., softening point 400°C), B20 (trade name; manufactured by Central Glass Co., Ltd., softening point 480°C), AZ739 (trade name; manufactured by Central Glass Co., Ltd., softening point 605°C), and PFL20 (trade name; manufactured by Central Glass Co., Ltd., softening point 700°C).

B₂O₃, which is one of components constituting the glass, is by itself a glassy material having a softening point of about 450°C and can be used as the glass powder (c) of the present invention. Examples of the commercially available B₂O₃ include boron oxide (trade name; manufactured by Kanto Chemical Co., Inc., Cica first grade Reagent).

Generally, glass powder composed of a plurality of components can attain a variety of properties such as a desired softening point, water resistance, stability, thermal expandability, or transparency, by adjusting the combination or the blending amount of a variety of components. Meanwhile, it is difficult for such various properties as described above to be simultaneously provided by glass powder composed of a single component. For instance, a rust-preventive coating film consisting of B₂O₃, which is highly soluble with respect to water, especially if exposed outdoors, is likely to undergo the dissolution of the coating film component, which possibly leads to problems with durability and anticorrosiveness of the coating film.

The content of the glass powder (c) with respect to the non-volatile content in the rust-preventive coating composition is usually from 0.01 to 20% by mass, preferably from 0.10 to 15% by mass, and more preferably from 0.20 to 10% by mass.

The median diameter (D50) of the glass powder (c) is usually from 1 to 10 µm, preferably from 1.5 to 8 µm, and more preferably from 2 to 6 µm.

The mass ratio ((c) /(b)) of the glass powder (c) to the zinc powder and/or zinc alloy powder (b) in the rust-preventive coating composition of the present invention is adjusted to from 0.005 to 0.10, more preferably from 0.010 to 0.09, and further preferably from 0.015 to 0.08. Controlling the mass ratio ((c) / (b)) of the glass powder (c) to the zinc powder and/or zinc alloy powder (b) to be in the above-described range allows the coating films to have rust prevention properties exhibited to be high after the high-temperature treatment that are attributable to the softening point of the glass powder (c) being from 400 to 700°C, as well as a high thermal-discoloration resistance, and favorably ensures a rust prevention property exhibited in the heated coating film and a rust prevention property exhibited in the unheated coating film, as well as the thermal-discoloration resistance exhibited in the heated coating film.

### <Other Binders>

The rust-preventive coating composition of the present invention may contain a binder other than the binder (a) in a range that is not detrimental to the objects and effects of the present invention. Examples of the other binder include polyvinyl butyral resins.

Examples of the polyvinyl butyral resin are S-LEC BM-1 (trade name, manufactured by Sekisui Chemical Co., Ltd.) and S-LEC BL-1 (trade name, manufactured by Sekisui Chemical Co., Ltd.).

### <Other Pigments>

The rust-preventive coating composition of the present invention may contain a pigment other than the zinc powder and/or zinc alloy powder (b) and the glass powder (c) for the purpose of securing a variety of coating film properties.

For example, the rust-preventive coating composition of the present invention may contain a rust-preventive pigment other than the zinc powder and/or zinc alloy powder (b) for the purpose of auxiliary securing rust prevention properties of a coating film. Examples of the rust-preventive pigment include a zinc phosphate-based compound, a calcium phosphate-based compound, an aluminum phosphate-based compound, a magnesium phosphate-based compound, a zinc phosphite-based compound, a calcium phosphite-based compound, an aluminum phosphite-based compound, a strontium phosphite-based compound, an aluminum tripolyphosphate-based compound, a zinc cyanamide-based compound, a borate compound, a nitro compound, and a compound oxide.

Examples of commercially available products of such rust-preventive pigments include LF BOSEI CP-Z (trade name; manufactured by KIKUCHI COLOR Co., Ltd.) as a zinc (aluminum) phosphate-based compound; PROTEX YM-70 (trade name; manufactured by Taihei Chemical Industrial Co., Ltd.) as a zinc (calcium) phosphite-based compound; PROTEX YM-92NS (trade name; manufactured by Taihei Chemical Industrial Co., Ltd.) as a zinc (strontium) phosphite-based compound; K White #84 (trade name; manufactured by TAYCA CORPORATION) as an aluminum tripolyphosphate-based compound; and LF BOSEI ZK-32 (manufactured by KIKUCHI COLOR Co., Ltd.) as a zinc cyanamide-based compound.

The rust-preventive pigments may be used singly, or two or more kinds thereof may be used in combination.

The rust-preventive coating composition of the present invention may further contain at least one inorganic powder selected from metal powder (excluding zinc powder, zinc alloy powders and molybdenum powder), zinc compound powder (excluding zinc phosphate compounds, zinc phosphite compounds and zinc cyanamide compound), mineral powders, and inorganic compound powders generating a pyrolysis gas.

Metal powder has conductivity, facilitating migration of an iron ion or a zinc ion, and has an action of improving the rust-preventive effect of a coating film. Examples of metal powder include Fe-Si powder, Fe-Mn powder, Fe-Cr powder, magnetic iron powder, and iron phosphide. Examples of commercially available metal powder include ferrosilicon (trade name; manufactured by KINSEI MATEC CO., LTD.), ferromanganese (trade name; manufactured by KINSEI MATEC CO., LTD.), ferrochrome (trade name; manufactured by KINSEI MATEC CO., LTD.), iron sand powder (manufactured by KINSEI MATEC CO., LTD.), and Ferrophos 2132 (manufactured by Occidental Chemical Corporation).

Zinc compound powders are considered to have a function of adjusting the activity of oxidation reaction such as the degree of ionization (generation of Zn²⁺) of the zinc powder and/or zinc alloy powder (b). The inclusion of zinc compound powders in the rust-preventive coating composition of the present invention can provide the composition with further appropriate rust prevention properties. Examples of the zinc compound powders include zinc chloride, zinc oxide, zinc sulfide, and zinc sulfate. Examples of commercially available products of the zinc compound powders include zinc oxide #1 (manufactured by SAKAI CHEMICAL INDUSTRY CO.,LTD.), zinc oxide JIS #3 (manufactured by Hakusui Tech Co. , Ltd. , or by SAKAI CHEMICAL INDUSTRY CO. , LTD.), SachtolichHD (zinc sulfide; trade name; manufactured by Sachleben Chemie GmbH), and zinc chloride (manufactured by Nagai Chemical Industrial Co., LTD.) .

Examples of the mineral powders include titanium mineral powder, silica powder, soda feldspar, potassium feldspar, zirconium silicate, wollastonite and diatomaceous earth. Examples of commercially available products of the mineral powders include Rutile Flour S (manufactured by KINSEI MATEC CO., LTD.), Ilmenite powder (manufactured by KINSEI MATEC CO., LTD.), A-PAX 45M (manufactured by KINSEI MATEC CO., LTD.), ceramic powder OF-T (manufactured by KINSEI MATEC CO., LTD.), Aplite (manufactured by KINSEI MATEC CO., LTD.), Silica MC-O (manufactured by Maruo Calcium Co., Ltd.), Barite BA (manufactured by Sakai Chemical Industry Co., Ltd.), Radiolite (manufactured by Showa Chemical Industry Co., Ltd.), and Celite 545 (manufactured by Johns Manville) .

The pyrolysis gas-generating inorganic compound powders are inorganic compound powders that undergo thermal decomposition, for example, thermal decomposition at from 500 to 1500°C, to generate a gas such as a CO₂ gas or a F₂ gas. The inorganic compound powders are incorporated into a rust-preventive coating composition from which a coating film is formed, and when a steel plate having the coating film is welded in a melting pool, a bubble, generated from organic substances contained in binders and the like, is removed from the melting pool together with a gas derived from the inorganic compound powders. Examples of the inorganic compound powders include calcium fluoride, calcium carbonate, magnesium carbonate and strontium carbonate. Examples of commercially available products of the inorganic compound powders include Fluorite 400-mesh (manufactured by KINSEI MATEC CO., LTD.), NS#400 (manufactured by NITTO FUNKA KOGYO K.K.), Magnesium Carbonate (manufactured by Tomita Pharmaceutical Co., Ltd.) and Strontium Carbonate A (manufactured by The Honjo Chemical Corporation).

Among those other pigments, it is preferred in terms of obtaining coating films having better heat stability that zirconium silicate be contained in the rust-preventive coating composition of the present invention. The inclusion of zirconium silicate, whose Mohs hardness is as high as 7.5, in the rust-preventive coating composition enables the coating film to have increased strength. Zirconium silicate has a high melting point of 2430°C, being highly stable even when heated. The use of zirconium silicate in the rust-preventive coating composition therefore provides coating films which are stable and keep strength even when heated at a high temperature at which heating operations are performed and which ranges from several hundred degrees centigrade to 1200°C.

When zirconium silicate is used, the content of zirconium silicate with respect to non-volatile content in the rust-preventive coating composition is usually from 2 to 50% by mass, preferably from 5 to 45% by mass, and more preferably from 10 to 40% by mass. When the content is within the above range, the coating film can have heat stability even when heated at high temperature.

### <Molybdenum and Molybdenum Compound>

The rust-preventive coating composition of the present invention can contain either or both of molybdenum (metal molybdenum) and a molybdenum compound. These function as oxidation inhibitor of zinc (as a so-called white-rust inhibitor) .

For less frequent occurrence of white rust, the rust-preventive coating composition of the present invention preferably contains, as an oxidation inhibitor of zinc (so-called white rust inhibitor), either or both of molybdenum (metal molybdenum) and a molybdenum compound.

Examples of the molybdenum compound include molybdenum oxides such as molybdenum trioxide, molybdenum sulfide, molybdenum halides, molybdic acid, ammonium molybdate, phosphomolybdic acid, silicomolybdic acid, alkali metal salts of molybdic acid, alkali metal salts of phosphomolybdic acid, alkali metal salts of silicomolybdic acid, alkali earth metal salts of molybdic acid, alkali earth metal salts of phosphomolybdic acid, alkali earth metal salts of silicomolybdic acid, manganese salt of molybdic acid, manganese salt of phosphomolybdic acid, manganese salt of silicomolybdic acid, basic nitrogen-containing compound salts of molybdic acid, basic nitrogen-containing compound salts of phosphomolybdic acid, and basic nitrogen-containing compound salts of silicomolybdic acid.

The molybdenum compounds may be used singly, or two or more kinds thereof may be used in combination.

When either or both of molybdenum and a molybdenum compound are used, the total content of molybdenum and a molybdenum compound is preferably 0.05 to 5.0 parts by mass, more preferably 0.3 to 3. 0 parts by mass, still more preferably 0.5 to 2.0 parts by mass, based on 100 parts by mass of the zinc powder and/or zinc alloy powder (b). When the content is the above range, sufficient zinc-antioxidization effect is achieved, the rust-preventive ability of the zinc powder and/or zinc alloy powder (b) is prevented from decreasing, and the rust prevention properties of the coating film can be maintained.

### <Coloring Pigment>

For the purpose of providing coating films with desired color, the rust-preventive coating composition of the present invention may contain a coloring pigment. Examples of the coloring pigment include titanium oxide, iron oxide, carbon black, copper-chromium black pigment, phthalocyanine green, and phthalocyanine blue. Examples of the commercially available coloring pigment include TITONE R-5N (manufactured by SAKAI CHEMICAL INDUSTRY CO., LTD.), iron oxide No.404 (manufactured by Morishita Bengara Kogyo Co., Ltd.), Mitsubishi Carbon Black MA100 (manufactured by Mitsubishi Chemical Corporation), DAIPYROXIDE BLACK #9510 (manufactured by Dainichiseika Color & Chemicals Mfg. Co., Ltd.), Heliogen Green L8690 (manufactured by BASF Japan Ltd.), and FASTOGEN Blue 5485 (manufactured by DIC Corporation).

The coloring pigments may be used singly, or two or more kinds thereof may be used in combination.

The content of the coloring pigment with respect to the non-volatile content in the rust-preventive coating composition is usually from 0.1 to 20% by mass, preferably from 0.2 to 15% by mass, and more preferably from 0.3 to 10% by mass.

### <Additive>

The rust-preventive coating composition of the present invention may contain additives. The additives are materials used in order to improve or maintain the performance of coating materials and coating films. Examples of the additives include anti-settling agents, drying agents, fluidity control agents, antifoaming agents, dispersing agents, color-separation preventive agents, anti-skinning agents, plasticizers, and ultraviolet absorbers. The additives may be used singly, or two or more kinds thereof may be used in combination.

Examples of the anti-settling agents include those of organic bentonite type, those of oxidized polyethylene type, those of fumed silica type and those of amide type. Examples of commercially available products of the anti-settling agents include TIXOGEL MPZ (trade name; manufactured by BYK Additives GmbH), Disparlon 4200-20 (trade name; manufactured by Kusumoto Chemicals, Ltd.), Disparlon A630-20X (trade name; manufactured by Kusumoto Chemicals, Ltd.), and AEROSIL 200 (trade name; manufactured by Nippon Aerosil Co., Ltd.).

The anti-settling agents may be used singly, or two or more kinds thereof may be used in combination.

The content of the anti-settling agent with respect to the non-volatile content of the rust-preventive coating composition is usually from 0.1 to 15% by mass, preferably from 0.2 to 10% by mass, and more preferably from 0.3 to 8% by mass.

### <Solvent>

For the rust-preventive coating composition of the present invention, organic solvents can be used as a dilute solvent of the base component or as a dispersion solvent of the pigment or the like.

Examples of the organic solvents include solvents commonly used in the field of coating materials, such as alcohol solvents, ester solvents, ketone solvents, aromatic solvents, and glycol solvents.

Examples of the alcohol solvents include methanol, ethanol, isopropanol and butanol. Examples of the ester solvents include ethyl acetate and butyl acetate. Examples of the ketone solvents include methyl isobutyl ketone and cyclohexanone. Examples of the aromatic solvents include benzene, xylene and toluene. Examples of the glycol solvents include propylene glycol monomethyl ether and propylene glycol monomethyl ether acetate. The solvents may be used singly, or two or more kinds thereof may be used in combination.

In the rust-preventive coating composition of the present invention, the content of the solvent is usually 10 to 90% by mass, preferably 15 to 85% by mass, and more preferably 20 to 80% by mass.

### [Uses of Rust-Preventive Coating Composition]

The rust-preventive coating composition of the present invention is preferably a heat-resistant rust-preventive coating composition.

The rust-preventive coating composition of the present invention is suited for use as a heat-resistant rust-preventive coating material employed in a processing process or the like of a steel plate. Heat-resistant rust-preventive coating materials are required to protect steel materials from rusting without adversely affecting fusion-cutting, welding or other operations performed during construction process, and moreover required to undergo little change in color caused by oxidation of zinc at the time of heating. The rust-preventive coating composition of the present invention has rust prevention properties and thermal-discoloration resistance that meet the above requirements.

### [Rust-Preventive Coating Film and Substrate with Rust-Preventive Coating Film]

The rust-preventive coating film of the present invention is formed from the above-described rust-preventive coating composition; and the substrate with a rust-preventive coating film of the present invention includes a substrate, e.g., a steel plate, and the rust-preventive coating film formed on the surface of the substrate, the rust-preventive coating film being composed of the above-described rust-preventive coating composition.

Usually, a substrate on which a rust-preventive coating composition is applied is subjected to blasting under a condition equivalent to a rust removal degree of not less than Sa2 1/2 in accordance with ISO 8501-1.

The rust-preventive coating film usually has an average dry film thickness of not more than 40 µm, preferably from 5 to 35 µm. The average dry film thickness is measured by using an electromagnetic film thickness measuring instrument.

### [Method for Producing Substrate with Rust-Preventive Coating Film]

The method for producing a substrate with a rust-preventive coating film, according to the present invention, includes a step of applying the above-described rust-preventive coating composition on a surface of a substrate such as a steel plate (coating step) and a step of curing the rust-preventive coating composition applied to form a rust-preventive coating film (curing step).

In the coating step, the rust-preventive coating composition of the present invention (in the case of a two component-type composition, a coating material obtained by mixing the base component with the pigment component) is applied, by a hitherto known method such as an air spray and an airless spray, on a surface of a substrate such as steel plates, to form an uncured coating film. A coating machine generally used in the application of the coating material in e. g. , ship yards and iron works is mainly an airless spray or a line coating machine. In the line coating machine, the film thickness is controlled by coating conditions including line speed, coating pressure of an air spray and airless spray and so on provided within the coating machine, and the size of spray nozzle (aperture diameter).

In the curing step, the curing temperature (drying temperature) is usually 5 to 40°C, preferably 10 to 30°C; and curing time (drying time) is usually 3 to 20 minutes, preferably 5 to 15 minutes. In the present invention, the substrate with a rust-preventive coating film, even through being heated, exhibits excellent rust prevention properties and thermal-discoloration resistance. That is, the substrate with the rust-preventive coating film of the present invention can attain improved rust prevention properties and thermal-discoloration resistance at the same time after being heated at a high temperature, for example, from 400 to 900°C.

### EXAMPLES

Hereinafter, the present invention will be described more specifically with reference to Examples, but the present invention is in no way limited by these Examples. In the following section including Examples, "part(s)" means "part(s) by mass" unless otherwise noted.

### [Preparation Example 1] Preparation of Condensate of Alkylsilicate

38 g of Ethyl Silicate 40 (manufactured by COLCOAT CO., LTD.), 18 g of industrial ethanol, 4 g of deionized water, and 0.03 g of 35% hydrochloric acid were introduced to a container, and stirred at 50°C for 3 hours, and thereto 40 g of isopropyl alcohol was added. A solution containing an alkylsilicate condensate was thus prepared.

### [Preparation Example 2] Preparation of Pigment Paste Component

Raw materials listed on Tables 1 to 3 which are described as pigment paste components in Examples and Comparative Examples, excluding zinc powder (spherical zinc powder, flaky zinc powder and flaky zinc alloy powder), were individually introduced into a polyethylene container, to which glass beads were added, and were shaken with a paint shaker for 3 hours, and then, zinc powder was added thereto. The mixture was shaken for 5 minutes to disperse the pigment. By using a 80-mesh filter, the glass beads were removed to prepare a pigment paste component. The pigment paste component was used in Examples 1 to 16 and in Comparative Examples 1 to 3 below.

### [Examples 1 to 16, Comparative Examples 1 to 3]

The condensate of alkylsilicate of Preparation Example 1, which is the base component, and the pigment paste component of Preparation Example 2, which is the pigment paste component, were introduced into a polyethylene container such that the proportions of those components are those (based on mass) as described in Tables 1 to 3, and those components were dispersed for 10 minutes with a speed disper. A rust-preventive coating composition was thus prepared.

Summary of the components listed on Tables 1 to 3 are as follows.
Solution of condensate of alkylsilicate: solution of condensate of alkylsilicate prepared in Preparation Example 1 (solid content concentration: 15.2% by mass)
Spherical zinc powder: F-2000 (manufactured by The Honjo Chemical Corporation)
Flaky zinc powder: STANDART Zinc flake GTT (manufactured by ECKART GmbH)
Flaky zinc alloy powder: STAPA 4 ZNAL7 (alloy of zinc and aluminum, manufactured by ECKART GmbH)
Anti-settling agent: AEROSIL 200 (manufactured by NIPPON AEROSIL CO., LTD.)
Black pigment: DAIPYROXIDE BLACK #9510 (manufactured by Dainichiseika Color & Chemicals Mfg. Co., Ltd.)
Zinc oxide: Zinc Oxide JIS #3 (manufactured by HakusuiTech Co., Ltd.)
Potassium feldspar: ceramic powder OF-T (manufactured by KINSEI MATEC CO., LTD.)
Zirconium silicate: A-PAX 45M (manufactured by KINSEI MATEC CO. , LTD.)
Glass powder 1 (softening point 389°C) : DPS300 (manufactured by ASAHI GLASS CO., LTD.)
Glass powder 2 (softening point 400°C): NB122A (manufactured by Central Glass Co., Ltd.)
Glass powder 3 (softening point 480°C): B20 (manufactured by Central Glass Co., Ltd.)
Glass powder 4 (softening point 510°C): TA149 (manufactured by Central Glass Co., Ltd.)
Glass powder 5 (softening point 605°C): AZ739 (manufactured by Central Glass Co., Ltd.)
Glass powder 6 (softening point 700°C): PFL20 (manufactured by Central Glass Co., Ltd.)
Glass powder 7 (softening point 450°C): boron oxide Cica first grade (manufactured by Kanto Chemical, Co., Inc.)
Glass powder 8 (softening point 750°C) : APS325 (manufactured by Pure Mick, Co., Ltd.)

### [Evaluation Method and Evaluation Criteria]

### (1) Rust Prevention Properties of Rust-Preventive Coating Film (Rusting)

A sandblasted surface of a sandblasted plate (JIS G3101, SS400, dimension: 150 mm × 70 mm × 2.3 mm) was coated with the rust-preventive coating composition by using a line coating machine. Subsequently, in accordance with JIS K5600 1-6, the sandblasted plate coated with the rust-preventive coating composition was dried in a thermostatic chamber at a temperature 23°C at a relative humidity of 50% for 1 week, to prepare a test plate having an average dry film thickness listed on Tables 1 to 3 composed of the rust-preventive coating film and the sandblasted plate. The average dry film thickness was measured by using an electromagnetic film thickness measuring instrument "LE-370" (trade name; manufactured by Kett Electric Laboratory).

The test plate was placed in a muffle furnace maintained at a temperature listed on Tables 1 to 3 (from 400 to 1000°C), heated for 3 minutes, taken out, and cooled to room temperature. This test plate was immersed in artificial sea water (salt content 3%) for 2 weeks.

In accordance with ASTM D 610, the percentage (%) of the rusting area to the total area of the test plate after immersion for 2 weeks was determined, and the state of rusting was evaluated. The evaluation criteria are as follows. The results are shown in Tables 1 to 3.

### [Evaluation Criteria for State of Rusting (ASTM D610)]

10: No rusting, or the percentage of rusting area with respect to the total area of the test plate is not more than 0.01%
9: the percentage of rusting area with respect to the total area of the test plate is more than 0.01% and not more than 0.03%
8: the percentage of rusting area with respect to the total area of the test plate is more than 0.03% and not more than 0.1%
7: the percentage of rusting area with respect to the total area of the test plate is more than 0.1% and not more than 0.3%
6: the percentage of rusting area with respect to the total area of the test plate is more than 0.3% and not more than 1%
5: the percentage of rusting area with respect to the total area of the test plate is more than 1% and not more than 3%
4: the percentage of rusting area with respect to the total area of the test plate is more than 3% and not more than 10%
3: the percentage of rusting area with respect to the total area of the test plate is more than 10% and not more than 16%
2: the percentage of rusting area with respect to the total area of the test plate is more than 16% and not more than 33%
1: the percentage of rusting area with respect to the total area of the test plate is more than 33% and not more than 50%
0: the percentage of rusting area with respect to the total area of the test plate is more than 50% to 100%

### (2) Thermal-Discoloration Resistance of Rust-Preventive Coating Film

A rust-preventive coating composition was applied to the sandblasted surface of a sandblasted plate (JIS G 3101, SS 400, dimension: 150 mm × 70 mm × 2.3 mm) using a line coating machine. Subsequently, the sandblasted plate coated with the rust-preventive composition was left to stand for 1 week in a thermostatic chamber at a temperature of 23°C and a relative humidity of 50% according to the standard of JIS K 5600 1-6 to form a test plate composed of the rust-preventive coating film having an average dry film thickness listed on Tables 1 to 3 and the sandblasted plate. Two pieces of such a test plate were prepared for each rust-preventive coating composition.

One of the test plates was placed in a muffle furnace maintained at a temperature listed on Tables 1 to 3 (from 400 to 1000°C), heated for 3 minutes, taken out, and cooled to room temperature. A rust-preventive coating film of the other test plate not subjected to the heat treatment was defined as a standard, and a rust-preventive coating film undergoing the heat treatment was subjected to measurement of its color difference [ΔE] using a spectrophotometer (SD-5000, manufactured by Nippon Denshoku Industries Co., Ltd.) . A color difference [ΔE] obtained that was 1.0 or less was determined to represent good thermal-discoloration resistance. The color difference [ΔE] of 1.0 is the maximum of the color difference values judged by all of the five persons who used their naked eyes as having no change in the color of the rust-preventive coating films.

Composition of example 5 is not according to the invention.

**[Table 1]**

| | | | | Comp. Ex. 1 | Example 1 | Example 2 | Example 3 | Example 4 | Example 5 |
|---|---|---|---|---|---|---|---|---|---|
| Coating composition | Base component | Solution of condensate of alkylsilicate | | 34.0 | 34.0 | 34.0 | 34.0 | 34.0 | 34.0 |
| | Pigment paste component | Spherical zinc powder | | 20.0 | 20.0 | 20.0 | 20.0 | 20.0 | 20.0 |
| | | Flaky zinc powder | | | | | | | |
| | | Flaky zinc alloy powder | | | | | | | |
| | | Anti-settling agent | | 1.5 | 1.5 | 1.5 | 1.5 | 1.5 | 1.5 |
| | | Black pigment | | 3.0 | 3.0 | 3.0 | 3.0 | 3.0 | 3.0 |
| | | Zinc oxide | | 5.0 | 5.0 | 5.0 | 5.0 | 5.0 | 5.0 |
| | | Potassium feldspar | | 15.0 | 15.0 | 15.0 | 15.0 | 15.0 | 15.0 |
| | | Zirconium silicate | | 10.0 | 10.0 | 10.0 | 10.0 | 10.0 | 10.0 |
| | | Glass powder 1(softening point: 389°C) | | | | | | | |
| | | Glass powder 2(softening point: 400°C) | | | | | | | |
| | | Glass powder 3(softening point: 480°C) | | | | | | | |
| | | Glass powder 4 (softening point: 510°C) | | | | | | | |
| | | Glass powder 5 (softening point: 605°C) | | | 0.1 | 0.3 | 1.0 | 1.5 | 2.5 |
| | | Glass powder 6(softening point: 700°C) | | | | | | | |
| | | Glass powder 7 (softening point: 450°C) | | | | | | | |
| | | Glass powder 8 (softening point: 750°C) | | | | | | | |
| | | Isopropyl alcohol | | 11.5 | 11.4 | 11.2 | 10.5 | 10.0 | 9.0 |
| | Total (in terms of mass) | | | 100.0 | 100.0 | 100.0 | 100.0 | 100.0 | 100.0 |
| Properties of coating compositions | Amount (% by mass) of zinc powder in non-volatile content of composition | | | 33.52 | 33.46 | 33.35 | 32.97 | 32.70 | 32.17 |
| | Amount (% by mass) of glass powder in non-volatile content of composition | | | - | 0.167 | 0.500 | 1.648 | 2.452 | 4.021 |
| | Solid amount (% by mass) of binder in non-volatile content of composition | | | 8.79 | 8.78 | 8.75 | 8.64 | 8.57 | 8.43 |
| | Mass ratio of glass powder /zinc powder of composition | | | - | 0.005 | 0.015 | 0.050 | 0.075 | 0.125 |
| | Solvent amount (% by mass) in composition | | | 40.33 | 40.23 | 40.03 | 39.33 | 38.83 | 37.83 |
| Properties of coating film | Average dry film thickness (µm) | | | 28 | 31 | 30 | 28 | 29 | 29 |
| | Rust prevention properties | Process conditions of test plate | No heating | 10 | 10 | 10 | 10 | 10 | 10 |
| | | | Heating at 800°C for 3 min. | 1 | 5 | 8 | 9 | 10 | 10 |
| | Thermal-discoloration resistance (color difference ΔE) | Process conditions of test plate | Heating at 800°C for 3 min. | 1.2 | 0.8 | 0.4 | 0.3 | 0.5 | 1.2 |

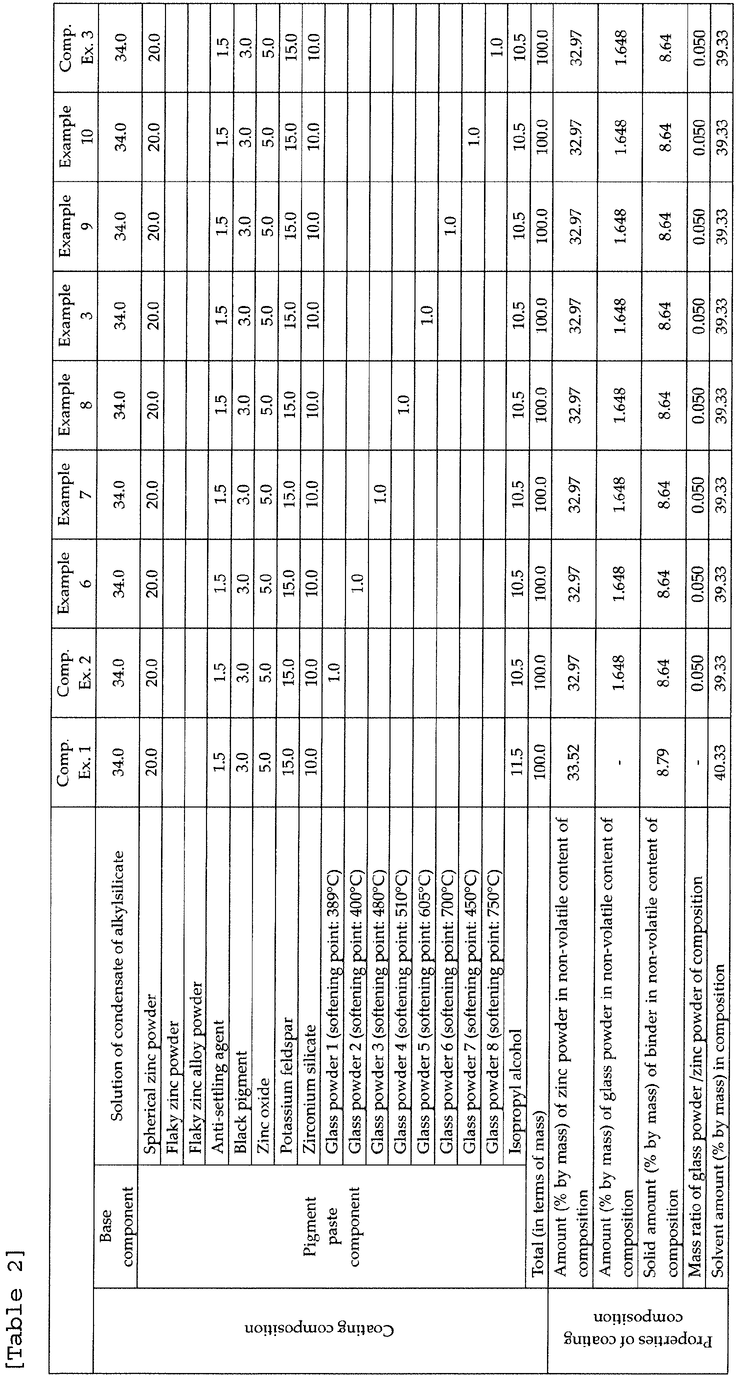

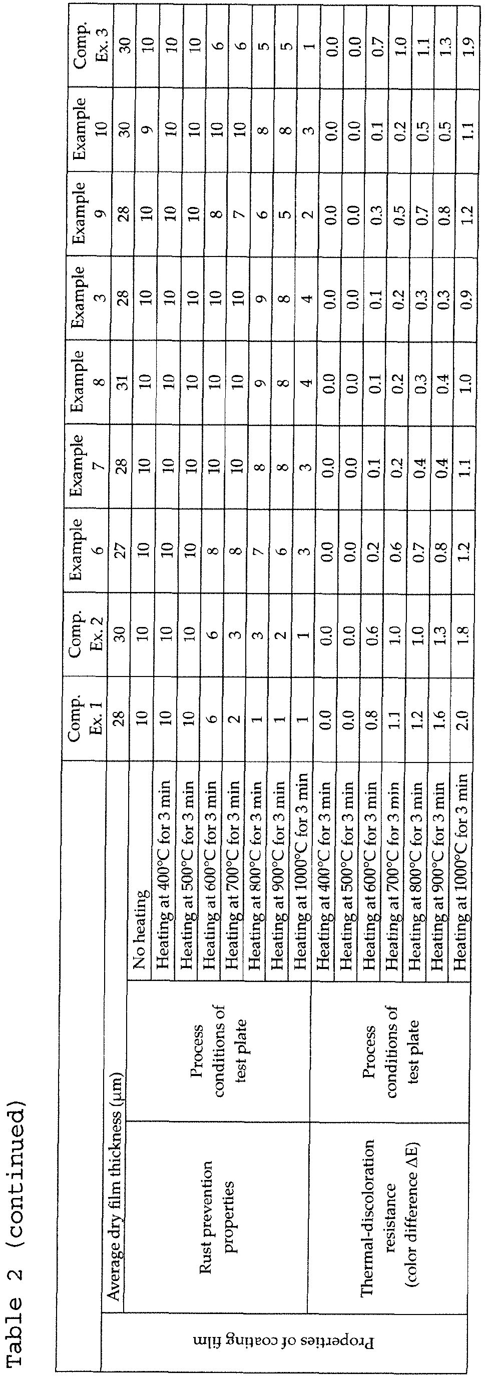

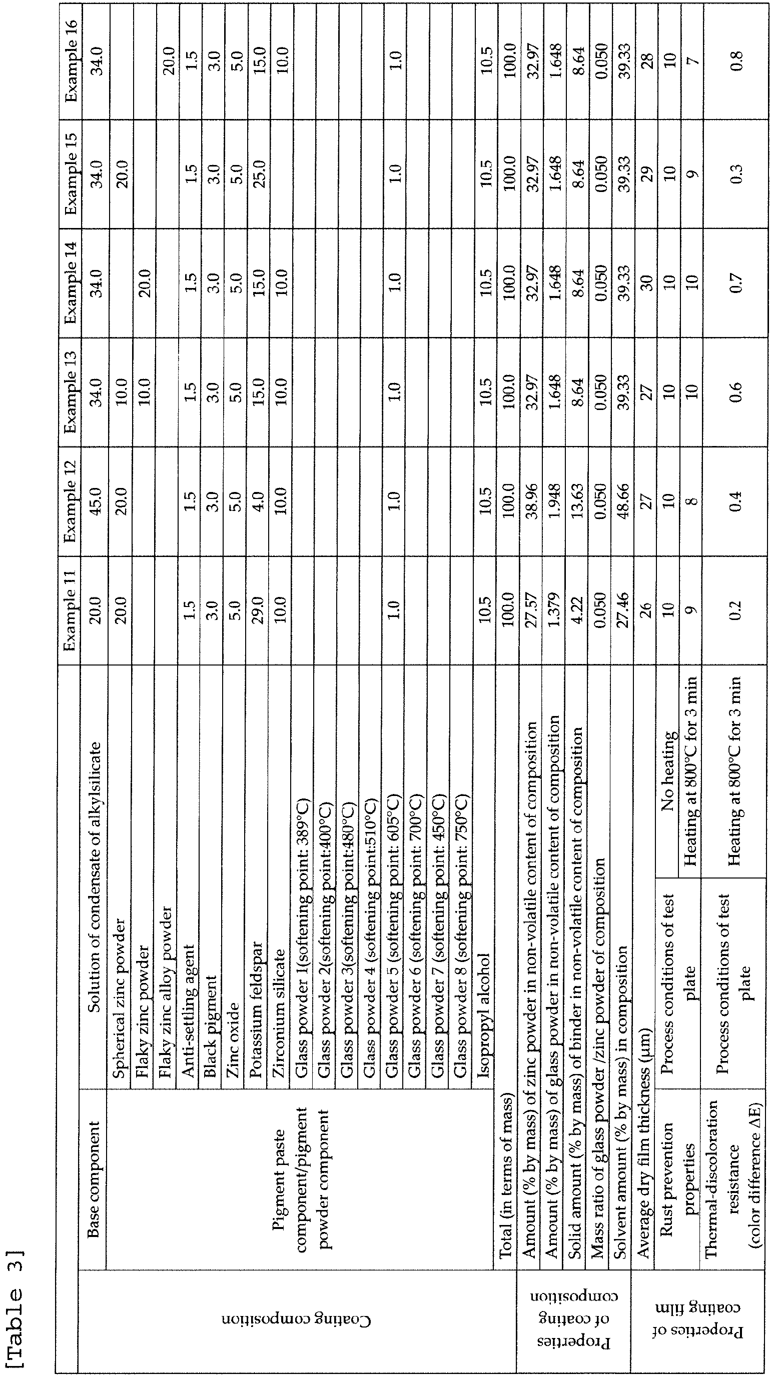

## Claims

1. A composition which is a rust-preventive coating composition comprising:
(a) a binder which is a condensate of at least one compound selected from alkylsilicates and methyltrialkoxysilanes;
(b) a zinc powder and/or zinc alloy powder; and
(c) a glass powder having a softening point of 400-700°C , as determined using a viscosimeter and according to the method mentioned in the description, and a median diameter (D50) of 1-10 µm,
wherein the mass ratio (c) / (b) of the glass powder (c) to the zinc powder and/or zinc alloy powder (b) is 0.005-0.10.

2. The composition of claim 1, which is heat-resistant.

3. A coating film formed from the composition of any of claims 1 or 2.

4. A substrate with a coating film, comprising the substrate and, formed on a surface thereof, a coating film comprising the composition of any of claims 1 or 2.

5. A method for producing a substrate with a coating film, comprising the steps of (i) applying the composition of any of claims 1 or 2 on a surface of a substrate, and (ii) curing the composition thus applied to form a coating film.

## Patentansprüche

1. Zusammensetzung, die eine rosthemmende Beschichtungszusammensetzung ist, umfassend:
(a) ein Bindemittel, das ein Kondensat aus mindestens einer Verbindung, ausgewählt aus Alkylsilikaten und Methyltrialkyloxysilanen ist;
(b) ein Zinkpulver und/oder Zinklegierungspulver; und
(c) ein Glaspulver mit einem Erweichungspunkt von 400-700 °C, wie mittels eines Viskosimeters und nach dem in der Beschreibung angegebenen Verfahren bestimmt, und einem Mediandurchmesser (D50) von 1-10 µm,
worin das Massenverhältnis (c)/(b) des Glaspulvers (c) zu dem Zinkpulver und/oder Zinklegierungspulver (b) 0,005-0,10 beträgt.

2. Zusammensetzung gemäß Anspruch 1, die hitzebeständig ist.

3. Beschichtungsfilm, der aus der Zusammensetzung gemäß einem beliebigen der Ansprüche 1 oder 2 gebildet ist.

4. Substrat mit einem Beschichtungsfilm, umfassend das Substrat und einen auf dessen Oberfläche gebildeten Beschichtungsfilm, der die Zusammensetzung nach einem der Ansprüche 1 oder 2 umfasst.

5. Verfahren zur Herstellung eines Substrats mit einem Beschichtungsfilm, umfassend die Schritte (i) Auftragen der Zusammensetzung gemäß einem beliebigen der Ansprüche 1 oder 2 auf eine Oberfläche eines Substrats und (ii) Härten der so aufgetragenen Zusammensetzung, um einen Beschichtungsfilm zu bilden.

## Revendications

1. Composition qui est une composition de revêtement antirouille comprenant :
(a) un liant qui est un condensat d'au moins un composé choisi parmi des alkylsilicates et des méthyltrialcoxysilanes ;
(b) une poudre de zinc et/ou une poudre d'alliage de zinc ; et
(c) une poudre de verre présentant un point de ramollissement de 400 à 700 °C, tel que déterminé en utilisant un viscosimètre et selon le procédé mentionné dans la description, et un diamètre médian (D50) de 1 à 10 µm,
dans lequel le rapport massique (c)/(b) de la poudre de verre (c) à la poudre de zinc et/ou la poudre d'alliage de zinc (b) est de 0,005 à 0,10.

2. Composition selon la revendication 1, qui est résistante à la chaleur.

3. Film de revêtement formé à partir de la composition selon l'une quelconque des revendications 1 ou 2.

4. Substrat avec un film de revêtement, comprenant le substrat et, formé sur une surface de celui-ci, un film de revêtement comprenant la composition selon l'une quelconque des revendications 1 ou 2.

5. Procédé de production d'un substrat avec un film de revêtement, comprenant les étapes consistant à (i) appliquer la composition selon l'une quelconque des revendications 1 ou 2 sur une surface d'un substrat, et (ii) durcir la composition ainsi appliquée pour former un film de revêtement.
